# EUROPÄISCHE PATENTSCHRIFT

(11) **EP 0 662 055 B1**
(45) Veröffentlichungstag und Bekanntmachung des Hinweises auf die Patenterteilung: **10.12.1997**
(21) Anmeldenummer: 93920780.9
(22) Anmeldetag: 20.09.1993
(51) Int. Cl.: B60S 1/34

(54) **SCHEIBENWISCHERANLAGE**
WINDSCREEN-WIPER INSTALLATION
SYSTEME D'ESSUIE-GLACE

(30) Priorität: 26.09.1992 DE 4232333
(43) Veröffentlichungstag der Anmeldung: 12.07.1995
(73) Patentinhaber: ITT Automotive Europe GmbH, 60488 Frankfurt am Main (DE)
(72) Erfinder: BLACHETTA, Thomas, D-74080 Heilbronn-Böckingen (DE); EGNER-WALTER, Bruno, D-74076 Heilbronn (DE); JAISLE, Klaus, D-74211 Leingarten (DE)
(74) Vertreter: Portwich, Peter
(86) Internationale Anmeldenummer: EP9302547
(87) Internationale Veröffentlichungsnummer: WO9407712

(56) Entgegenhaltungen:
- EP-A- 0 457 382
- EP-A- 0 487 859
- DE-A- 4 028 494
- DE-A- 4 033 201
- DE-A- 4 110 648

## Beschreibung

Die Erfindung betrifft eine Scheibenwischeranlage, insbesondere für Kraftfahrzeuge, von der im Oberbegriff des Anspruchs 1 angegebenen und aus der DE-A-4 028 494 bekannten Art.

Es ist bekannt, daß insbesondere bei hohen Fahrzeuggeschwindigkeiten der Fahrtwind unter einem derart starken Druck auf die Windschutzscheibe des Fahrzeugs aufprallt, daß er beim Abströmen an den über die Windschutzscheibe sich bewegenden Wischblättern und Wischarmen einen Auftrieb erzeugt. Dadurch wird der Kontakt zwischen der Winsdschutzscheibe und dem Wischblatt so stark vermindert, daß die Reinigungswirkung der gesamten Anlage deutlich herabgesetzt ist. Insbesondere bei hohen Geschwindigkeiten ist es jedoch besonders notwendig, daß die Windschutzscheibe einwandfrei gereinigt wird, um die Sicherheit der Fahrzeuginsassen nicht zu gefährden.

Mit der DE-A-40 28 494 ist eine Verstelleinrichtung für derartige Scheibenwischeranlagen vorgeschlagen worden, bei der die Wirklinie der Wischerarmfeder bezüglich der Achse des Wischerarmes verstellt wird. Bei dieser Anlage ist das wellenseitige Ende der Wischerarmfeder an einem Verstellhebel eingehängt, wobei der Verstellhebel eine Kulisse abfährt. Dabei wird das wellenseitige Ende der Wischerarmfeder in Richtung auf die Windschutzscheibe bzw. weg von dieser bewegt. Als nachteilig hat sich jedoch herausgestellt, daß bei einer Verstellung der Wirklinie der Wischerarmfeder gegen die Kraft der Wischerarmfeder gearbeitet werden muß, wodurch der Antrieb der Scheibenwischeranlage zusätzlich belastet wird. Außerdem muß die gesamte Spannkraft der Wischerarmfeder vom Schwenklager des Stellhebels aufgenommen werden. Da insbesondere die Verstellkraft für die Wischerarmfeder sich ständig ändert, ist ein gleichmäßiger Lauf des Antriebs der Scheibenwischeranlage nicht gewährleistet.

Weiterhin ist bei dieser bekannten Scheibenwischeranlage die Kulisse am Gehäuse des Wischerlagers vorgesehen, welches in einer fixen Position an der Fahrzeugkarosserie befestigt ist. Deshalb ist es erforderlich den Wischerarm bei seiner Montage auf die Wischerwelle so zu justieren, daß sich die Anpreßkraft in bezug auf den Wischwinkel in der gewünschten Weise verändert. Die Montage des Wischerarmes auf die Wischerwelle gestaltet sich dadurch unnötig aufwendig.

Aus der DE-A-40 33 201 ist eine andere Scheibenwischeranlage bekannt, die aber wesentliche Merkmale des Oberbegriffs des Anspruchs 1 nicht aufweist und damit eigentlich nicht von dieser Art ist. Beim Wischarm dieser Scheibenwischeranlage gehört zu der Verstelleinrichtung für den Anpreßdruck ein separater Elektromotor, der in einer entsprechenden Ausnehmung des Befestigungsteiles angeordnet ist. Ein von dem Motor antreibbarer, auf einer Kreisbahn bewegbarer Stift greift in eine Führungsnut an einem Stützhebel ein, um diesen bedarfsweise auf die Scheibe zu oder von der Scheibe weg zu verschwenken. Der Stützhebel ist mit seinem von der Wischerwelle abgewandten Ende in einem Lager am Befestigungsteil schwenkbar gelagert. Außerdem ist das wellenseitige Ende der Wischerarmfeder an diesem Stützhebel eingehängt, deren anderes Ende am Wischerarm festgelegt ist. Der Stützhebel bewirkt eine leichte Verschwenkbarkeit der Wischerarmfeder zum Zweck der Verstellung der Anpreßkraft. Nachteilig ist der erforderliche separate Motor und dessen Steuerung, wodurch die Scheibenwischeranlage zu aufwendig und teuer wird. Außerdem ist diese Anlage kaum geeignet, den Wischeranpreßdruck in Abhängigkeit vom Wischwinkel zu verändern, vielmehr dient diese Anlage zur bedarfsweisen oder fahrgeschwindigkeitsabhängigen Veränderung des Anpreßdruckes.

Der Erfindung liegt daher die Aufgabe zugrunde, eine Scheibenwischeranlage von der im Oberbegriff des Anspruchs 1 beschriebenen Art derart weiterzubilden, daß bei geringerer Belastung des Antriebes von den Kräften der Wischerarmfeder ein gleichmäßiger Lauf gewährleistet ist und die Montage des Wischerarmes auf die Wischerwelle vereinfacht ist.

Diese Aufgabe wird erfindungsgemäß durch eine Scheibenwischeranlage mit den Merkmalen des Anspruchs 1 gelöst.

Bei der erfindungsgemäßen Vorrichtung ist die Wischerarmfeder einerseits am Wischerarm, andererseits am Stützhebel eingehängt, der sich seinerseits am Befestigungsteil abstützt. Hierdurch wird auf einfache Weise die gesamte Zugkraft der Wischerarmfeder aufgenommen und über den Stützhebel am Befestigungsteil abgestützt. Der Verstellhebel des Stellelements, der am Stützhebel angreift, muß demnach nicht mehr die Zugkraft der Wischerarmfeder aufnehmen. Hierdurch kann die Lagerung des Stellhebels wesentlich einfacher und weniger robust gebaut werden, wodurch die Feinfühligkeit und Genauigkeit der gesamten Verstellbewegung erhöht wird. Da die Abstützung über den Stützhebel erfolgt, können auch stärkere Wischerarmfedern eingebaut werden, ohne daß empfindliche Lager der Verstelleinrichtung Schaden nehmen. Bei der erfindungsgemäßen Vorrichtung erfolgt die Verstellung der Anpreßkraft dadurch, daß die Wirklinie der Wischerarmfeder bezüglich der Achse des Wischerarms dadurch verstellt wird, daß der Verstellhebel am Stützhebel angreift und diesen um sein von der Wischerwelle abgewandtes Ende, welches in einem Lager am Befestigungsteil festgelegt ist, verschwenkt. Da das wellenseitige Ende der Wischerarmfeder am Stützhebel eingehängt ist, wird auch dieses verschwenkt. Für die Verschwenkbewegung müssen lediglich geringe Kräfte aufwendet werden, da nicht die Feder selbst, sondern der Stützhebel verschwenkt wird.

Dies hat den Vorteil, daß die Anpreßkraft des Wischblattes an die Windschutzscheibe exakt von der Lage des Wischblattes auf der Scheibe abhängig gemacht werden kann. So kann z.B. in den beiden Wendepunkten des Wischblattes eine geringe Anpreßkraft herrschen, so daß der Wischgummi beim Umklappen von der einen Wischlage in die andere nicht unnötig belastet wird, wodurch auch der Antrieb geschont wird. Außerdem kann das Wischblatt in seiner Ruhelage nahezu völlig entlastet sein, wodurch das Wischblatt geringeren Verformungskräften unterworfen wird und dadurch die Lebensdauer erhöht wird.

Dadurch, daß die Kulisse auf dem axialen Fortsatz am Befestigungsteil angeordnet und verdrehbar an diesem gehalten ist, ergibt sich eine stabile Lagerung der Kulisse, welche die Montage des Wischerarmes auf die Wischerwelle erleichtert. Da außerdem die Kulisse mit dem Befestigungsteil einschließlich Wischerarm eine Baueinheit bildet, ist die Montage des Wischerarmes auf die Wischerwelle noch weiter vereinfacht. Zusätzliche Justierarbeiten am Wischerarm sind nicht erforderlich. Von Vorteil ist auch, daß herkömmliche Scheibenwischeranlagen auf einfache Weise mit der erfindungsgemäßen Vorrichtung nachgerüstet werden können.

Bei einer vorteilhaften Weiterbildung ist vorgesehen, daß das Schwenklager des Stützhebels in der Nachbarschaft des Einhängepunkts der Wischerarmfeder am Wischerarm vorgesehen ist. Hierdurch können in bevorzugterweise die Kräfte für die Verstellbewegung des Stützhebels reduziert werden, da aufgrund der unmittelbaren Nachbarschaft von Schwenklager des Stützhebels und Einhängepunkt der Wischerarmfeder nur noch geringe, zur Längsrichtung der Feder orthogonale Kräfte auftreten.

Eine kraftlose Verstellung kann dadurch erzielt werden, daß das Schwenklager des Stützhebels am Befestigungsteil und der Einhängepunkt der Wischerarmfeder am Wischerarm zusammenfallen. Auf diese Weise werden die gesamten von der Wischerarmfeder herrührenden Kräfte vom Stützhebel aufgenommen. Für die Verstellbewegung des Verstellhebels, mit dem die Wirklinie der Wischerarmfeder in Bezug auf die Achse des Wischerarms verändert wird, müssen lediglich Lager- und Reibungskräfte überwunden werden. Dies hat den besonderen Vorteil, daß der Antrieb der Scheibenwischeranlage keine zusätzlich Belastung erfährt.

Eine hohe Funktionssicherheit und geringe konstruktive Maßnahmen zur Führung des Verstellhebels an der Kulisse werden dadurch erreicht, daß das Schwenklager des Stützhebels bezüglich des Einhängepunkts der Wischerarmfeder am Wischerarm einen geringen Abstand in der Richtung aufweist, daß der Verstellhebel der Verstelleinrichtung permanent gegen die Kulisse gedrängt wird. Diese Maßnahme stellt sicher, daß der Kulissenstein des Verstellhebels die Kurve der Kulisse mit Sicherheit abfährt. Dabei kann die Anlagekraft des Verstellhebels an der Kulisse so gewählt werden, daß auch bei hohen Wischgeschwindigkeiten der Verstellhebel von der Kulisse nicht abhebt.

Eine Verringerung der Stellkraft wird dadurch erzielt, daß der Einhängepunkt des wellenseitigen Endes der Wischerarmfeder mit Abstand zum wellenseitigen Ende des Stützhebels an diesem festgelegt ist. Hierdurch kann ein günstiger Hebelarm erzielt werden, so daß die Kräfte zwischen Kulisse und Verstellhebel weiter verringert werden können. Durch unterschiedliche Stützhebel mit unterschiedlich angeordneten Einhängepunkten kann die Anpreßkraft des Wischblattes der Scheibenwischeranlage auf einfache Weise verändert und fahrzeugspezifisch angepaßt werden.

Vorzugsweise ist der Stützhebel als Doppelschenkelhebel ausgebildet, zwischen dem die Wischerarmfeder angeordnet ist. Diese Ausgestaltung gewährleistet eine hohe Sicherheit bei der Aufnahme der Federkräfte, wobei zur Erhöhung der Steifigkeit des Hebels dieser ein U-Profil aufweisen kann.

Ein einfaches Einhängen des Stützhebels am Befestigungsteil wird dadurch ermöglicht, daß das Schwenklager des Stützhebels gabelförmig ausgebildet ist. Über die Kraft der Wischerarmfeder wird der Stützhebel sicher im Lager gehalten.

Um die Verstelleinrichtung vor Schmutz und Feuchtigkeit zu schützen, ist die Kulisse über eine O-Ring-Abdichtung und/oder über eine Labyrinthdichtung im Befestigungsteil angeordnet. Dies hat den Vorteil, daß auch der Verschleiß auf ein Minimum reduziert ist.

Eine lagegerechte Anordnung der Kulisse bezüglich der Lage der Befestigungseinrichtung bzw. des Wischerarmes wird dadurch erzielt, daß die Kulisse über eine Paßfeder, einen Zweiflach o.dgl. mit dem Lager der Wischerwelle verbunden ist. Hierdurch erübrigen sich spätere Einstell- und Ausrichtarbeiten der Kulisse nach dem Aufsetzen des Befestigungsteils auf die Welle und über die definierte Zuordnung von Kulisse und Wischwelle wird die exakte Ansteuerung der Wischerarmfeder bzw. deren Verlagerung abhängig von der Lage des Wischblattes auf der Windschutzscheibe gewährleistet.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im einzelnen beschrieben sind. Dabei zeigen:
- Figur 1: einen Teillängsschnitt durch einen Wischerarm mit auf einer Wischerwelle befestigtem Befestigungsteil;
- Figur 2: eine Prinzipskizze der Anordnung der beiden Hebel im Befestigungsteil, mit einer ersten Ausführungsform einer Abdichtung der Kulisse;
- Figur 3: eine zweite Ausführungsform der Abdichtung der Kulisse;
- Figur 4: einen Querschnitt durch den an der Wischerwelle befestigten Bereich des Befestigungsteils;
- Figur 5: eine Draufsicht auf die Kulisse;
- Figur 6: einen Schnitt durch die Kulisse gemäß Figur 5; und
- Figur 7: ein Diagramm, die Abwicklung der Kulissenform zeigend.

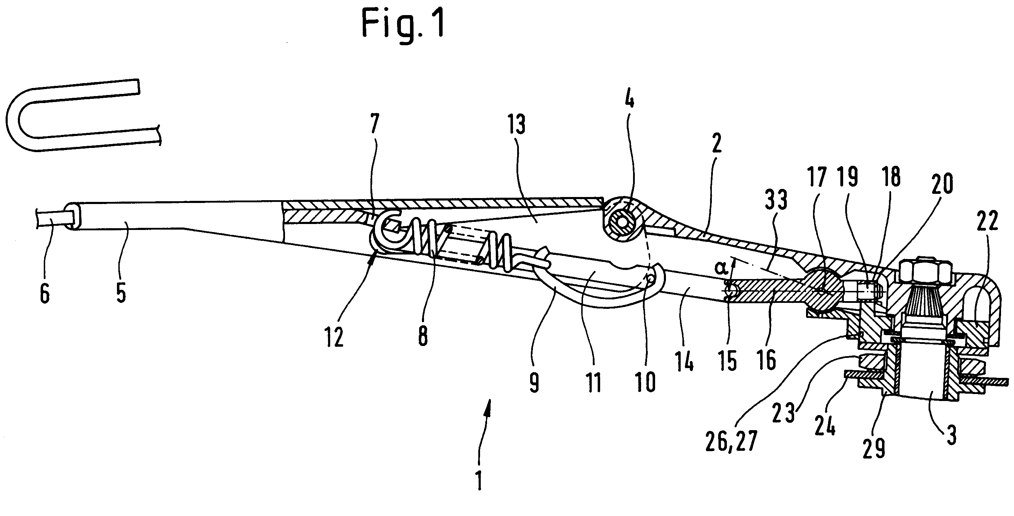

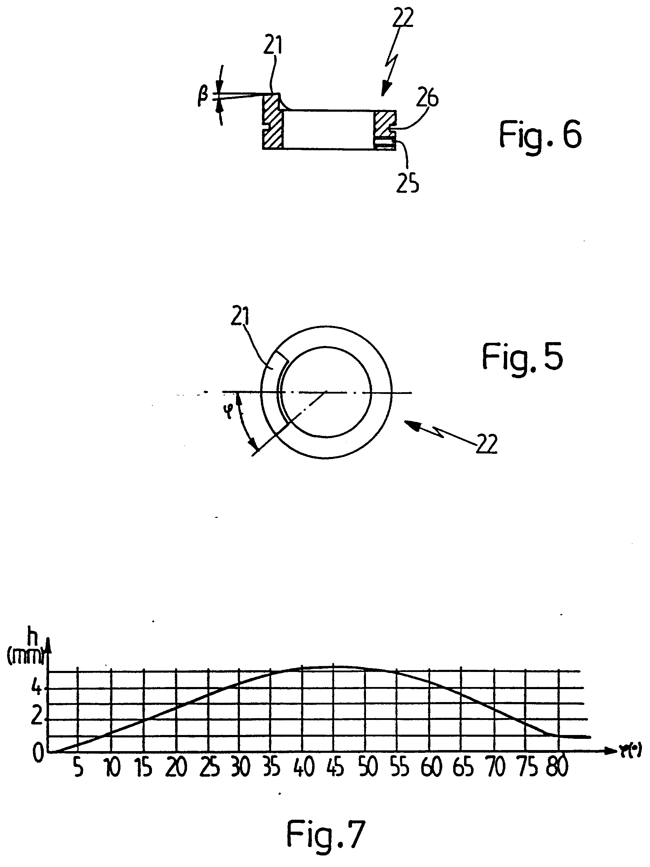

In der Figur 1 ist ein Ausführungsbeispiel einer insgesamt mit 1 bezeichneten Scheibenwischeranlage dargestellt, bei der ein Befestigungsteil 2 an einer Wischerwelle 3 auf übliche Weise befestigt ist. Am Befestigungsteil 2 ist über ein Schwenkgelenk 4 ein Wischerarm 5 schwenkbar festgelegt. Der Wischerarm 5 ist mit einer Wischerstange 6 versehen, an dessen freien Ende ein nicht dargestelltes Wischblatt befestigt werden kann. Das andere Ende der Wischerstange 6 weist eine Befestigungsöffnung 7 für eine Wischerarmfeder 8 auf, die über einen Bügel 9 an einem Lager 10 eines Stützhebels 11 eingehängt ist. Dieser Stützhebel 11 stützt sich seinerseits an einem Schwenklager 12 eines Fortsatzes 13 des Befestigungsteils 2 ab. Am wellenseitigen Ende 14 ist ein weiteres Lager 15 für einen Verstellhebel 16 vorgesehen, der seinerseits über ein Schwenklager 17 im Befestigungsteil 2 schwenkbar gelagert ist. Das wellenseitige Ende des Verstellhebels 16 ist mit einem Rollenlager 18 versehen, welches auf einen zum Verstellhebel 16 axialen Zapfen 19 aufgeschoben und mit einem Sicherungsring 20 gegen ein Abrutschen gesichert ist. Das Rollenlager 18 läuft auf einer Kurve 21 (Figuren 5 und 6) einer Kulisse 22 um, die koaxial zur Wischerwelle 3 angeordnet ist. Dabei erstreckt sich die Kurve 21 der Kulisse 22 in axialer Richtung bezüglich der Kulisse 22. Die Kulisse 22 weist außerdem eine Umfangsnut 26 auf, in der ein O-Ring 27 als Dichtring eingesetzt ist.

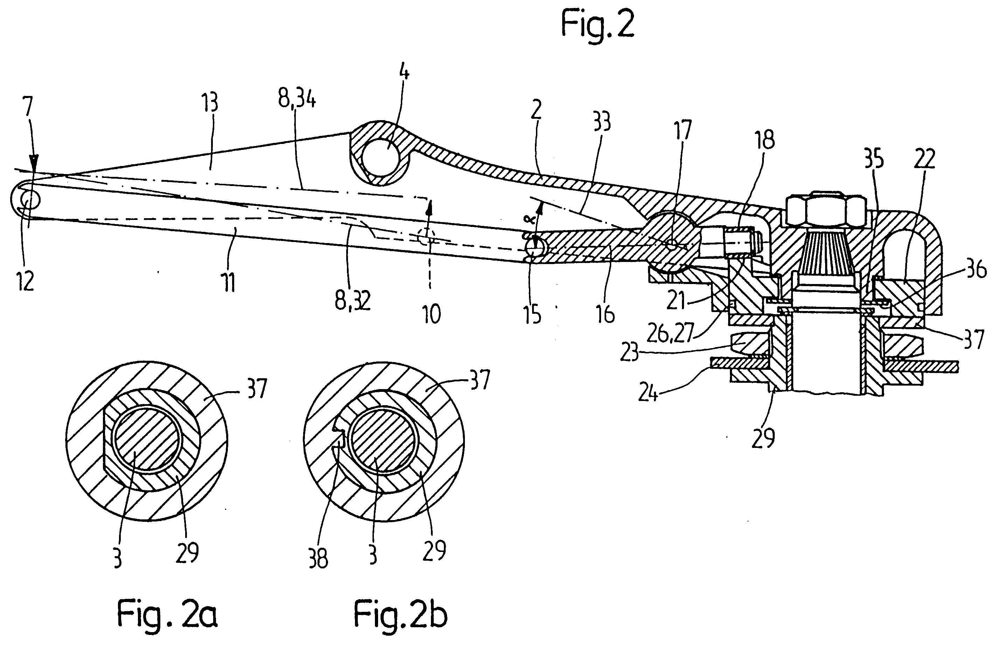

Es wird noch darauf hingewiesen, daß das Wischlager 29 mittels der Befestigungsmutter 23 beispielsweise am Karosserieblech 24 befestigt ist. Weitere Einzelheiten der Verstelleinrichtung sind in der Beschreibung zu Figur 2 näher beschrieben.

Die Figur 2 zeigt schematisch das Befestigungsteil 2 mit dem Stützhebel 11 und dem Verschwenkhebel 16, wobei die Wischerarmfeder 8 lediglich als Linie 32 dargestellt ist. Aus der Figur 2 ist deutlich erkennbar, daß die Befestigungsöffnung 7, in der die Wischerarmfeder 8 eingehängt ist, geringfügig oberhalb des Schwenklagers 12 des Stützhebels 11 liegt. Aus diesem Grunde wird über die Kraft der Wischerarmfeder 8 der Stützhebel 11 mit einer Kraft F entgegen der Richtung des Uhrzeigersinns um das Schwenklager 12 beaufschlagt. Diese Kraft F bewirkt, daß der Verstellhebel 16 in Richtung des Uhrzeigersinns beaufschlagt wird, so daß dessen Rollenlager 18 permanent an der Kurve 21 der Kulisse 22 anliegt. Durch den Abstand der Befestigungsöffnung 7 vom Schwenklager 12 des Stützhebels 11 kann die Anlagekraft bestimmt werden. Ein Grenzfall ist erreicht, wenn die Befestigungsöffnung 7 mit dem Schwenklager 12 zusammenfällt. Jedoch bedarf es dann für das Rollenlager 18 einer Zwangsführung, da es dann ohne Kraft an der Kurve 21 anliegt.

Bei der in der Figur 2 wiedergegebenen Lage des Verstellhebels 16 wird die maximale Anpreßkraft erzielt. Fährt das Rollenlager 18 die Kurve 21 ab, dann erreicht der Verstellhebel 16 durch Verschwenkung um den Winkel α eine durch die Linie 33 gezeichnete Lage, die eine Extremlage für die minimale Anpreßkraft darstellt. Die Feder 8 nimmt dann eine Lage ein, wie sie mit der Linie 34 angedeutet ist. Dabei ist deutlich erkennbar, daß sich die Kraft F nicht ändert, da sich der Abstand der Befestigungsöffnung 7 vom Schwenklager 12 nicht ändert. Die Anpreßkraftverstellung kann daher ohne groben zusätzlichen Kraftaufwand durchgeführt werden, wobei sich die für die Verstellung erforderliche Kraft nicht ändert. Gleichlaufschwankungen des Antriebs treten daher aus diesem Grunde nicht auf.

Bei dem in der Figur 2 wiedergegebenen Ausführungsbeispiel ist das Befestigungsteil 2 mit dem daran angelenkten Wischerarm sowie die beiden Hebel 11 und 16 und die Kulisse 22 als Baueinheit ausgebildet. Die Kulisse 22 ist auf einen axialen Fortsatz 35 des Befestigungsteils 2 aufgeschoben und über eine Scheibe 36 gesichert. Am unteren stirnseitigen Ende der Kulisse 22 ist eine weitere Scheibe 37 befestigt, die an einer Seite abgeflacht oder mit einer axialen Paßfeder 38 versehen ist (siehe Figur 2a bzw. 2b). Entsprechend der Abflachung bzw. der Paßfeder 38 ist die Wellenbuchse 29 mit einer Abflachung bzw. einer axialen Nut versehen, so daß die Scheibe 37 und dadurch die Kulisse 22 in eine einzigen definierten Lage eingesetzt werden können. Die Kurve 21 der Kulisse 22 ist auf diese Weise in bezug auf die Scheibenwischeranlage 1 bzw. auf die Windschutzscheibe selbst ausgerichtet. Ein nachträgliches Ausrichten und Einjustieren und Arretieren über spezielle Arretierschrauben erübrigt sich in diesem Fall.

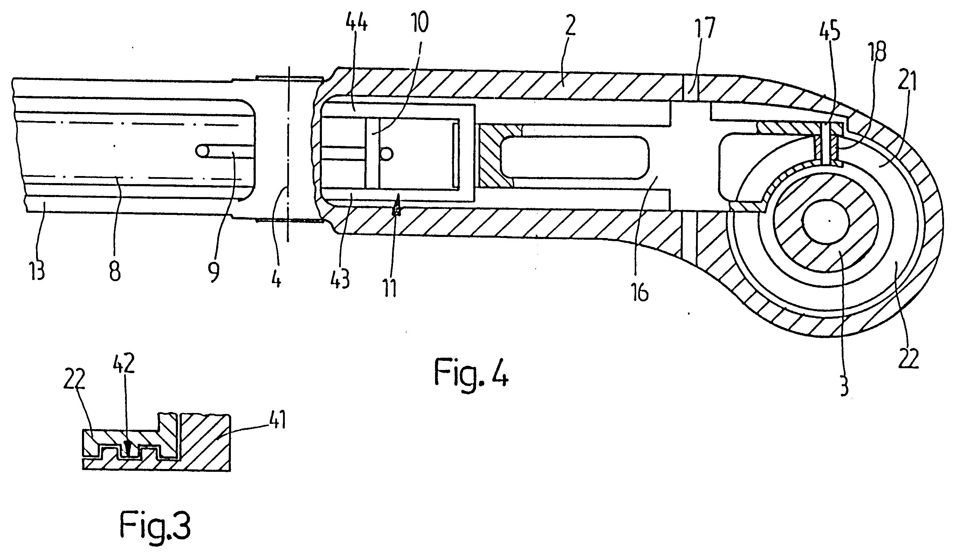

Das in Figur 3 gezeigte Ausführungsbeispiel bezieht sich auf eine Scheibenwischeranlage, bei der eine Abdeckkappe 28 das Befestigungsteil 2 zumindest teilweise abdeckt. Die Abdeckkappe 28 weist eine Schürze 41 auf, deren unteres Ende um die Kulisse 22 herumgelegt ist. Das untere Ende der Schürze 41 bildet mit der Unterseite der Kulisse 22 eine Labyrinthdichtung 42.

Die Figur 4 zeigt ein Ausführungsbeispiel eines Befestigungsteils 2 im Querschnitt, wobei insbesondere der Verstellhebel 16 und der Stützhebel 11 dargestellt sind. Der Stützhebel 11 ist als Doppelschenkelhebel ausgebildet, wobei zwischen den beiden Schenkeln 43 und 44 die Wischerarmfeder 8 sowie der Bügel 9 vorgesehen sind, wobei der Bügel 9 am Lager 10 eingehängt ist. Bei diesem Ausführungsbeispiel ist das Rollenlager 18 auf einem Zapfen 45 drehbar gelagert, der im wesentlichen parallel zum Schwenklager 17 angeordnet ist. Außerdem ist der Zapfen 45 so ausgerichtet, daß sich dessen Achse radial zur Wischerwelle 3 erstreckt. Unterhalb des Rollenlagers 18 befindet sich die Kulisse 22 mit der Kurve 21, die bei diesem Ausführungsbeispiel im rechten oberen Quadranten der Kulisse 22 angeordnet ist.

Die Figur 5 zeigt eine Aufsicht auf die Kulisse 22, wobei sich die Kurve 21 vom linken unteren in den linken oberen Quadranten erstreckt. Die Kulisse 22 weist im wesentlichen eine zylindrische Ringform auf, wobei die Kurve 21 axial auf eine Stirnseite aufgesetzt ist, wie aus der Figur 6 ersichtlich ist.

Im Diagramm der Figur 7 ist die Kulissenform ersichtlich, wobei eine maximale Erhebung von etwa 3 mm bis 10 mm, insbesondere 5 mm, bei halbem Wischwinkel φ zu verzeichnen ist. Aus der Figur 6 ist außerdem ersichtlich, daß die Stirnfläche der Kurve 21 gegenüber der Stirnfläche der Kulisse 22 um einen Winkel β abgeschrägt ist, so daß das Rollenlager 18 stets linienförmig auf der Kurve 21 abrollt. Die Oberfläche der Kurve 21 ist in jeder Drehstellung stets parallel zur Achse des Rollenlagers 18 des Verstellhebels 16.

## Patentansprüche

1. Scheibenwischeranlage (1), insbesondere für Kraftfahrzeuge mit einem Antrieb und einem über ein Befestigungsteil (2), das an seiner auf die zu wischende Scheibe weisenden Seite einen in bezug auf die Aufnahmeöffnung für die Wischerwelle (3) axialen Fortsatz (35) aufweist, gelenkig mit der Wischerwelle (3) des Antriebes verbundenen, das Wischblatt tragenden Wischerarm (5), an dem das von der Wischerwelle (3) abgewandte Ende einer das Wischblatt auf die Scheibe pressenden Wischerarmfeder (8) festgelegt ist, deren das Wischblatt auf die Scheibe pressende Kraft über eine Verstelleinrichtung veränderbar ist, wobei die Verstelleinrichtung eine Kulisse (22) mit einer in ihre axiale Richtung weisenden Steuerkurve (21) aufweist, über die bei Betätigung der Scheibenwischeranlage (1) ein an dem Befestigungsteil (2) gelagerter Verstellhebel (16) derart verschwenkt wird, daß die Wirklinie der Wischerarmfeder (8) bezüglich der Achse des Wischerarmes (5) verändert wird, dadurch **gekennzeichnet,** daß der Verstellhebel (16) an einem Stützhebel (11) angreift, an dem das wellenseitige Ende der Wischerarmfeder (8) festgelegt ist, und der mit seinem von der Wischerwelle (3) abgewandten Ende in einem Lager (12) am Befestigungsteil (2) schwenkbar gelagert ist, und daß die Kulisse (22) auf dem Fortsatz (35) angeordnet und verdrehbar an diesem gehalten ist, so daß die Kulisse (22) mit dem Befestigungsteil (2) einschließlich Wischerarm (5) eine Baueinheit bildet.

2. Scheibenwischeranlage nach Anspruch 1, dadurch gekennzeichnet, daß das Schwenklager (12) des Stützhebels (11) in der Nachbarschaft des Einhängepunkts (7) der Wischerarmfeder (8) am Wischerarm (5) vorgesehen ist.

3. Scheibenwischeranlage nach Anspruch 1 oder 2, dadurch gekennzeichnet, daß das Schwenklager (12) des Stützhebels (11) und der Einhängepunkt (7) der Wischerarmfeder (8) am Wischerarm (5) zusammenfallen.

4. Scheibenwischeranlage nach Anspruch 1 oder 2, dadurch gekennzeichnet, daß das Schwenklager (12) des Stützhebels (11) bezüglich des Einhängepunkts (7) der Wischerarmfeder (8) am Wischerarm (5) einen geringen Abstand in der Richtung aufweist, daß die Verstelleinrichtung permanent gegen die Kulisse (22) gedrängt wird.

5. Scheibenwischeranlage nach einem der vorhergehenden Ansprüche, dadurch gekennzeichnet, daß der Einhängepunkt (7) des wellenseitigen Endes der Wischerarmfeder (8) mit Abstand zum wellenseitigen Ende (14) des Stützhebels (11) an diesem festgelegt ist.

6. Scheibenwischeranlage nach einem der vorhergehenden Ansprüche, dadurch gekennzeichnet, daß der Stützhebel (11) als Doppelschenkelhebel ausgebildet ist, zwischen dem die Wischerarmfeder (8) angeordnet ist.

7. Scheibenwischeranlage nach einem der vorhergehenden Ansprüche, dadurch gekennzeichnet, daß das Schwenklager (12) des Stützhebels (11) gabelförmig ausgebildet ist.

8. Scheibenwischeranlage nach einem der vorhergehenden Ansprüche, dadurch gekennzeichnet, daß die Kulisse (22) über eine O-Ring-Dichtung (27) und/oder über eine Labyrinthdichtung (42) im Befestigungsteil (2) angeordnet ist.

9. Scheibenwischeranlage nach einem der vorhergehenden Ansprüche, dadurch gekennzeichnet, daß die Kulisse (22) über eine Paßfeder (38), einen Zweiflach o.dgl. mit dem Lager der Wischerwelle (3) verbunden ist.

## Claims

1. A windscreen wiper system (1), in particular, for automotive vehicles, comprising a drive and a wiper arm (5) which, by way of a mounting portion (2), is pivotally connected to the wiper shaft (3) of the drive and which carries the wiper blade, the mounting portion (2) including on its side facing the screen to be wiped an axial extension (35) which is in axial relationship to the take-up opening for the wiper shaft (3), to which wiper arm is fixed the end of a wiper arm spring (8) remote from the wiper shaft (3), the said spring (8) forcing the wiper blade on the screen, with the force of the spring (8) forcing the wiper blade onto the screen being variable through an adjusting mechanism, the adjusting mechanism comprising a sliding insert (22) including a control cam (21) showing to the axial direction of the sliding insert, through which, upon actuation of the windscreen wiper system (1), a set lever (16) fitted to the mounting portion (2) is so swivelled that the line of operation of the wiper arm spring (8) relative to the axis of the wiper arm (5) is varied,
**characterized** in that the set lever (16) engages a support lever (11) to which is fixed the end of the wiper arm spring (8) facing the shaft side, and the end of the support lever facing away from the wiper shaft (3) is swivellably disposed on the mounting portion (2) within a bearing (12), and in that the sliding insert (22) is arranged on the extension (35) and is rotatably held thereon so that the sliding insert (22) with the mounting portion (2) along with the wiper arm (5) forms an integral unit.

2. A windscreen wiper system as claimed in claim 1,
**characterized** in that the swivel bearing (12) of the support lever (11) is provided in the vicinity of the hook-on point (7) of the wiper arm spring (8) on the wiper arm (5).

3. A windscreen wiper system as claimed in claim 1 or claim 2,
**characterized** in that the swivel bearing (12) of the support lever (11) and the hook-on point (7) of the wiper arm spring (8) on the wiper arm (5) coincide.

4. A windscreen wiper as claimed in claim 1 or claim 2,
**characterized** in that the swivel bearing (12) of the support lever (11) relative to the hook-on point (7) of the wiper arm spring (8) on the wiper arm (5) is of a small directional distance, such that the adjusting mechanism is permanently forced against the sliding insert (22).

5. A windscreen wiper system as claimed in any one of the preceding claims,
**characterized** in that the hook-on point (7) of the end of the wiper arm spring (8) facing the shaft side is fixed at a distance from the end (14) of the support lever (11) to the latter.

6. A windscreen wiper system as claimed in any one of the preceding claims,
**characterized** in that the support lever (11) is configured as a dual-leg lever between which is arranged the wiper arm spring (8).

7. A windscreen wiper system as claimed in any one of the preceding claims,
**characterized** in that the swivel bearing (12) of the support lever (11) is of a fork-type configuration.

8. A windscreen wiper system as claimed in any one of the preceding claims,
**characterized** in that the sliding insert (22) is accommodated within the mounting portion (2) sealed by an O-ring gasket (27) and/or a labyrinth-type pack (42).

9. A windscreen wiper system as claimed in any one of the preceding claims,
**characterized** in that the sliding insert (22) is connected to the bearing of the wiper shaft (3) by way of a feather (38), or a dihedron, or the like.

## Revendications

1. Essuie-glace (1), notamment pour véhicule automobile, comprenant des moyens moteurs et un bras d'essuie-glace (5) qui porte le balai d'essuie-glace et est relié d'une manière articulée à l'arbre d'essuie-glace (3) des moyens moteurs, par l'intermédiaire d'une pièce de fixation (2) comportant, sur son côté faisant face à la vitre à balayer, une partie en saillie (35) axiale vis-à-vis de l'ouverture de logement prévue pour l'arbre d'essuie-glace (3), tandis que c'est sur le bras d'essuie-glace (5) qu'est fixée l'extrémité, opposée à l'arbre d'essuie-glace (3), d'un ressort de bras d'essuie-glace (8) qui applique le balai d'essuie-glace en appui sur la vitre et dont la force appliquant le balai d'essuie-glace en appui sur la vitre est modifiable au moyen d'un dispositif de réglage, le dispositif de réglage comprenant une pièce coulissante (22) présentant une came de commande (21) qui est orientée suivant sa direction axiale et au moyen de laquelle, lors d'un actionnement de l'essuie-glace (1), un levier de réglage (16) monté à palier sur la pièce de fixation (2) bascule de façon telle que la ligne d'action du ressort de bras d'essuie-glace (8) vis-à-vis de l'axe du bras d'essuie-glace (5) est modifiée, caractérisé en ce que le levier de réglage (16) attaque un levier d'appui (11) sur lequel est fixée l'extrémité du ressort de bras d'essuie-glace (8) située du côté de l'arbre et qui, par son extrémité opposée à l'arbre d'essuie-glace (3), est monté basculant dans un palier (12) situé sur la pièce de fixation (2), et en ce que la pièce coulissante (22) est disposée sur la partie en saillie (35) et est maintenue rotative sur cette partie en saillie, de façon telle que la pièce coulissante (22) constitue un ensemble structurel unitaire avec la pièce de fixation (2), y compris le bras d'essuie-glace (5).

2. Essuie-glace selon la revendication 1, caractérisé en ce que le palier de basculement (12) du levier d'appui (11) est prévu au voisinage du point (7) d'accrochage du ressort de bras d'essuie-glace (8) sur le bras d'essuie-glace (5).

3. Essuie-glace selon la revendication 1 ou 2, caractérisé en ce que le palier de basculement (12) du levier d'appui (11) et le point (7) d'accrochage du ressort de bras d'essuie-glace (8) sur le bras d'essuie-glace (5) coïncident.

4. Essuie-glace selon la revendication 1 ou 2, caractérisé en ce que le palier de basculement (12) du levier d'appui (11) présente une faible distance vis-à-vis du point (7) d'accrochage du ressort de bras d'essuie-glace (8) sur le bras d'essuie-glace (5) suivant la direction dans laquelle le levier de réglage est repoussé en permanence en appui sur la pièce coulissante (22).

5. Essuie-glace selon l'une des revendications précédentes, caractérisé en ce que le point (10) d'accrochage de l'extrémité du ressort de bras d'essuie-glace (8) située du côté de l'arbre est fixé sur le levier d'appui (11) à distance de l'extrémité (14) de ce dernier située du côté de l'arbre.

6. Essuie-glace selon l'une des revendications précédentes, caractérisé en ce que le levier d'appui (11) est réalisé sous forme d'un levier à deux ailes entre lesquelles le ressort de bras d'essuie-glace (8) est disposé.

7. Essuie-glace selon l'une des revendications précédentes, caractérisé en ce que le palier de basculement (12) du levier d'appui (11) est réalisé en forme de fourchette.

8. Essuie-glace selon l'une des revendications précédentes, caractérisé en ce que la pièce coulissante (22) est disposée dans la pièce de fixation (2) moyennant l'interposition d'un joint torique d'étanchéité (27) et/ou d'une étanchéité à labyrinthe (42).

9. Essuie-glace selon l'une des revendications précédentes, caractérisé en ce que la pièce coulissante (22) est rendue solidaire du palier de l'arbre d'essuie-glace (3) au moyen d'une clavette (38), d'un cylindre à deux méplats ou analogue.
